# EUROPEAN PATENT SPECIFICATION

(11) **EP 1 213 116 B1**
(45) Date of publication and mention of the grant of the patent: **16.08.2006**
(21) Application number: 01128832.1
(22) Date of filing: 04.12.2001
(51) Int. Cl.: B29C 37/00, B29C 44/12, B32B 7/08, F02B 77/13, B29C 59/02, B32B 5/18, B32B 25/08

(54) **Process for manufacturing soundproof cover and soundproof cover**
Verfahren zur Herstellung einer Schallschutzabdeckung und Schallschutzabdeckung
Procédé pour la fabrication d'un revêtement d'isolation acoustique et revêtement d'isolation acoustique

(30) Priority: 05.12.2000 JP 2000369704
(43) Date of publication of application: 12.06.2002
(73) Proprietor: TOKAI RUBBER INDUSTRIES, LTD., Komaki-shi, Aichi-ken, 485-8550 (JP)
(72) Inventor: Ito, Michio, Komaki-shi, Aichi-ken, 485-8550 (JP)
(74) Representative: TBK-Patent

(56) References cited:
- EP-A- 0 819 559
- FR-A- 2 732 283
- US-A- 3 900 650
- PATENT ABSTRACTS OF JAPAN vol. 004, no. 099 (M-021), 16 July 1980 (1980-07-16) & JP 55 057700 A (EBARA CORP), 28 April 1980 (1980-04-28)

## Description

### BACKGROUND OF THE INVENTION

### Field of the Invention

The present invention relates to a process for manufacturing a soundproof cover. In the resulting soundproof cover, a sound-shielding portion, which is composed of a rubber, and a sound-absorbing portion, which is composed of a foamed resin, are formed integrally with each other. In particular, the present invention relates to a process for manufacturing a soundproof cover in which coming-off hardly arises at the interface between the sound-shielding portion and the sound-absorbing portion.

### Description of the Related Art

Recently, many component members have been required to exhibit high performance. One of the high-performance requirements is silence. One of the methods to upgrade silence is to reduce noises by disposing a soundproof member.

As the soundproof member, there is a soundproof cover, which is disposed in such a manner that it faces a source of noises. For example, a soundproof cover is available for a vehicle, such as an automobile. The vehicle soundproof cover is disposed so as to face a vehicle engine.

The vehicle soundproof cover has a construction in which a sound-absorbing portion and a sound-shielding portion are laminated. For the sound-absorbing member, a porous material, such as a foamed polyurethane resin and a fibrous mat, is used. For the sound-shielding portion, a material, such as an iron plate, a resin plate and a rubber sheet, is used. Further, the sound-absorbing portion and the sound-shielding portion can be bonded integrally, or they can be independent of each other and can be fastened together with each other. Furthermore, the soundproof cover is put in place by fastening means so that it faces a source of noises.

For instance, Japanese Unexamined Patent Publication (KOKAI) No. 8-270,889 discloses a specific example of a soundproof cover for a vehicle. The following are the features of the vehicle soundproof cover. The vehicle soundproof cover includes a sound-shielding plate and a sheet-shaped sound-absorbing member. The sound-shielding plate is boarded onto a vehicle, and is installed to a surface of an apparatus, which generates noises, by providing a predetermined interval therebetween. The sound-absorbing member is disposed between the sound-shielding plate and the apparatus, and is composed of a polymer foamed substance. When the sound-shielding plate is installed to the apparatus, the sound-absorbing member is compressed.

Recently, a soundproof cover has been utilized in which a rubber is used as a sound-shielding portion and a foamed resin is used as a sound-absorbing portion. Namely, when a rubber is used for a sound-shielding portion, it is possible to inhibit the sound-shielding portion from becoming a source of noises. Specifically, when a metal plate or a hard resin plate is used for a sound-shielding portion, there has been a problem in that the sound-shielding portion itself becomes a source of noises because it transmits noises. Further, when a rubber is used for a sound-shielding rubber, it is possible to reduce the cost required for manufacturing the soundproof cover. Specifically, when installing the soundproof cover, it is not necessary to use a vibration-insulating member, such as a rubber grommet, which inhibits vibrations from transmitting to the sound-shielding portion by way of fastening means. Furthermore, since the sound-shielding portion, which is composed of a rubber, exhibits a flexibility, it effects an advantage in that the soundproof cover can be assembled with ease.

However, the soundproof cover, in which a rubber is used for the sound-shielding portion, has a problem in that the sound-absorbing portion and the sound-shielding portion are likely to cause coming-off at the interface therebetween.

### SUMMARY OF THE INVENTION

The present invention has been developed in view of the aforementioned circumstances. It is therefore an object of the present invention to provide a process for manufacturing a soundproof cover. In the resulting soundproof cover, a sound-shielding portion, which is composed of a rubber, and a sound-absorbing portion, which is composed of a foamed resin, are formed integrally with each other, and coming-off hardly occurs at the interface between the sound-shielding portion and the sound-absorbing portion.

In order to achieve the aforementioned object, the inventors of the present invention had been investigating the ways for enlarging the bonding force between the sound-shielding portion and the sound-absorbing portion to such an extent that coming-off hardly occurs at the interface between the sound-shielding portion and the sound-absorbing portion. As a result, they found out that the object could be achieved by carrying out shot blasting onto a surface of the sound-shielding portion and by forming the sound-absorbing portion on the surface of the sound-shielding portion, which had been subjected to the shot blasting. Thus, they have completed the present invention.

A process for manufacturing a soundproof cover according to the present invention comprises the steps of: forming a sound-shielding portion being composed of a rubber; carrying out shot blasting onto a surface of the sound-shielding portion; and forming a sound-absorbing portion, being composed of a foamed resin, an the surface of the sound-shielding portion, which has been subjected to the shot blasting, integrally therewith.
The problem is also solved according to the features of independent claim 11. Further embodiments of the invention are defined in the dependent claims.

In the soundproof cover manufacturing process according to the present invention, the bonding force is enlarged between a sound-shielding portion, being composed of a rubber, and a sound-absorbing portion, being composed of a foamed resin, by carrying out shot blasting onto a surface of the sound-shielding portion. Hence, in accordance with the present soundproof cover manufacturing process, it is possible to manufacture a soundproof cover in which coming-off hardly occurs at the interface between the sound-shielding portion and the sound-absorbing portion.

Thus, in accordance with the present soundproof cover manufacturing process, the sound-shielding Portion, being composed of a rubber, and the sound-absorbing portion, being composed of a foamed resin, are bonded firmly by carrying out shot blasting onto a surface of the sound-shielding portion. Consequently, in the resulting soundproof cover, coming-off hardly occurs at the interface between the sound-shielding portion and the soundabsorbing portion.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Fig. 1 is a drawing for illustrating an arrangement of an example of a vehicle soundproof cover, which was manufactured in accordance with the present invention;
Fig. 2 is a drawing for illustrating a step of forming a sound-absorbing portion for the example of a vehicle soundproof cover, which was manufactured in accordance with the present invention;
Fig. 3 is a perspective drawing for illustrating a fastener for the example of a vehicle soundproof cover, which was manufactured in accordance with the present invention;
Fig. 4 is a drawing for illustrating the example of a vehicle soundproof cover, which was manufactured in accordance with the present invention, after it was subjected to a rupture test; and
Fig. 5 is a drawing for illustrating a comparative example of a vehicle soundproof cover, which was manufactured in a conventional manner, after it was subjected to a rupture test.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

The present soundproof cover manufacturing step comprises the sound-shielding portion forming step, the shot blasting step and the sound-absorbing portion forming step.

In the sound-shielding portion forming step, the sound-shielding portion, which is composed of a rubber, is formed. As far as the sound-shielding portion, which is composed of a rubber, can be formed, the sound-shielding portion forming step is not limited in particular. Namely, it is possible to employ a step similar to a sound-shielding portion forming step, in which a sound-shielding portion being composed of a rubber is formed, in the conventional soundproof cover manufacturing process. Moreover, in the sound-shielding portion forming step, the sound-shielding portion is formed into a predetermined configuration.

As the sound-shielding portion forming step, for example, it is possible to name a manufacturing process in which compression molding is carried out. Specifically, a rubber raw material for forming the sound-shielding portion is charged into a mold, and is pressurized while the mold is held at a predetermined temperature.

A rubber for forming the sound-shielding portion is not limited in particular. Namely, it is possible to use rubbers for making the conventional soundproof cover. As such a rubber, for instance, it is possible to name a rubber whose constituent member is an acrylonitrile-butadiene rubber (NBR), a chloroprene rubber (CR), or the like. Moreover, the rubber for forming the sound-shielding portion can contain additives, which are included in ordinary rubbers.

As the rubber for forming the sound-shielding portion, an NBR can be a preferable option. Since an NBR has a proper mass, it exhibits a sound-shielding property due to the mass effect when it is used in the resulting soundproof cover. Further, since an NBR exhibits an appropriate rigidity, it gives a rigidity to the resulting soundproof cover so that the resulting soundproof cover can be handled with ease. Furthermore, an NBR is good in terms of the oil resistance, it is possible to use the resulting soundproof cover in environments in which oils are likely to dissipate.

In the shot blasting step, shot blasting is carried out onto a surface of the sound-shielding portion. By carrying out shot blasting, it is possible to firmly bond a sound-absorbing portion, which is formed of a foamed resin, with the sound-shielding portion, which is formed of a rubber.

The conditions of shot blasting are not limited in particular. Namely, the conditions depend on a type of a rubber for forming the sound-shielding portion, a type of a foamed resin for forming the sound-absorbing portion, and so on. Accordingly, the shot blasting is carried out under the conditions, which is determined as actually required by specific cases. However, the shot blasting can preferably be carried out under the following conditions. For instance, an abrasive powder can preferably have an average particle diameter falling in a range of from 0.3 to 1.0 mm, and can preferably exhibit a Rockwell C hardness of from 40 to 65 H_{R}C. Further, the abrasive powder can preferably be projected at a rate of from 100 to 140 kg/min. at a velocity of from 50 to 70 m/sec. for a period of from 1 to 6 minutes.

The shot blasting can preferably be carried out onto an entire interface between the sound-shielding portion and the sound-absorbing portion in the resulting soundproof cover. When the shot blasting is carried out onto the entire interface, the sound-shielding portion and the sound-absorbing portion are bonded firmly with each other. As a result, coming-off hardly occurs at the interface.

In the sound-absorbing portion forming step, a sound-absorbing portion, which is composed of a foamed resin, is formed on the surface of the sound-shielding portion, which has been subjected to the shot blasting, integrally therewith. As far as the sound-absorbing portion, which is composed of a foamed resin, can be formed on the surface of the sound-shielding portion, which has been subjected to the shot blasting, the sound-absorbing portion forming step is not limited in particular. Namely, it is possible to employ a step similar to a sound-absorbing portion forming step, in which a sound-shielding portion being composed of a foamed resin is formed on a surface of a sound-shielding portion, in the conventional soundproof cover manufacturing process.

As the sound-absorbing portion forming step, it is possible to name the following manufacturing step. For example, in the manufacturing step, the sound-shielding portion is placed in a cavity of a mold for forming a sound-absorbing portion, cavity which has a configuration of a completed sound-absorbing portion. Then, a liquid-like raw material, a molten resin, etc., is injected into the mold, and it is foamed therein. In such a sound-absorbing portion forming step, the sound-shielding portion is placed so that the surface, which has been subjected to the shot blasting, faces a liquid-like raw material, a molten resin, etc., which is injected into the mold. Accordingly, when a liquid-like raw material, a molten resin, etc., which has been injected into the mold, foams and expands to fill in the cavity, the resulting foamed resin comes to contact with the surface of the sound-shielding portion, which has been subjected to the shot blasting. Thus, the sound-absorbing portion, which has the configuration conforming to the cavity, is formed integrally with the sound-shielding portion.

A liquid-like raw material, a resin, etc., for forming the sound-shielding portion is not limited in particular. Namely, it is possible to use resins for making the conventional soundproof cover. As such a resin, for instance, it is possible to name a foamed polyurethane resin, a foamed silicone resin, or the like.

The foamed resin can preferably be a foamed polyurethane resin. In view of the high conforming ability to mating component members, which have complicated and irregular superficial configurations, when the resulting soundproof cover is put in service, the high sound-absorbing ability, the inexpensive cost, and so on, it is preferable to use a foamed polyurethane resin for forming the sound-absorbing portion.

The sound-absorbing portion forming step can preferably be carried out while placing a fastener on a part of the surface of the sound-shielding portion. If such is the case, it is possible to make a soundproof cover in which the fastener is connected integrally with the sound-absorbing portion as well as the sound-shielding portion. Namely, by manufacturing a soundproof cover, which is provided with a fastener, it is possible to firmly fasten the soundproof cover, which exhibits a flexibility, to a mating component member. Moreover, by connecting a fastener integrally with the sound-shielding portion, which is composed of a rubber, it is possible to obviate a vibration-insulating member, such as a rubber grommet, which has been needed when installing a fastener to the conventional soundproof cover. Thus, it is possible to reduce the cost required for assembling a soundproof cover.

The fastener can preferably be a component part, which demarcates at least a part of a through hole penetrating the resulting soundproof cover to make opposite openings. If such is the case, a preliminary through hole, which demarcates a part of the through hole, is formed at a position in the sound-shielding portion in advance, position which corresponds to the through hole.

When a fastener is a component part, which demarcates at least a part of the through hole, it is possible to form the through hole in the resulting soundproof cover. Accordingly, it is easy to assemble the soundproof cover so as to put it in service. Specifically, the fastening of a soundproof cover, which is provided with a fastener, can be carried out in the following manner. For instance, a convexed portion is formed on an engine, or the like. A threaded hole is formed in the end surface of the leading end of the convexed portion. The soundproof cover is fitted to the engine by means of fastening a bolt into the threaded hole, and so on, while interposing the fastener therebetween. Consequently, it is easy to assemble the soundproof cover with a mating component member. As a result, it is possible to suppress the increment of the manufacturing cost in the assembly operation of the soundproof cover.

Moreover, as far as the fastener can demarcate at least a part of the through hole, the other portions of the faster, excepting the portion demarcating a part of the thorough hole, are not limited in particular. As the fastener, for example, it is possible to name members, such as an annular member made of a metal, a plate-shaped member with a hole opened, and the like. The material qualities of the fastener can be so that the fastener can be connected integrally with the sound-shielding portion and/or the sound-absorbing portion and can hold the soundproof cover properly. Taking the fatigue set, etc., due to the fastening into consideration, the fastener can preferably be formed of a metal at the portion around the through hole.

In accordance with the present soundproof cover manufacturing process, the bonding force is enlarged between the sound-shielding portion and the sound-absorbing portion by carrying out shot blasting. Hence, it is possible to manufacture a soundproof cover in which coming-off hardly occurs at the interface between the sound-shielding portion and the sound-absorbing portion.

The soundproof cover manufactured in accordance with the present soundproof cover manufacturing process exhibits a satisfactory soundproof ability, because it comprises the sound-shielding portion, which is composed of a rubber, and the sound-absorbing portion, which is composed of a foamed resin.

The reason behind the advantages is still under investigation. At present, it is believed that oil contents, which bleed out of a rubber forming the sound-shielding portion, are removed by shot blasting. Namely, it has been known that rubbers bleed out oil contents, which result from the rubber molecular chains, as time elapses. Accordingly, in the conventional soundproof cover, oil contents are bled out of a rubber, which forms the sound-shielding portion, and cause coming-off at the interface between the sound-shielding portion and the sound-absorbing portion. On the other hand, in the present soundproof cover manufacturing process, the oil contents are removed from the surface of the sound-shielding portion by shot blasting. Consequently, the sound-shielding portion and the sound-absorbing portion are connected firmly with each other. Thus, coming-off hardly occurs at the interface between the sound-shielding portion and the sound-absorbing portion.

### Example

The present invention will be hereinafter described in detail with reference to a specific example.

As a specific example, a vehicle soundproof cover was manufactured by employing the present soundproof cover manufacturing process.

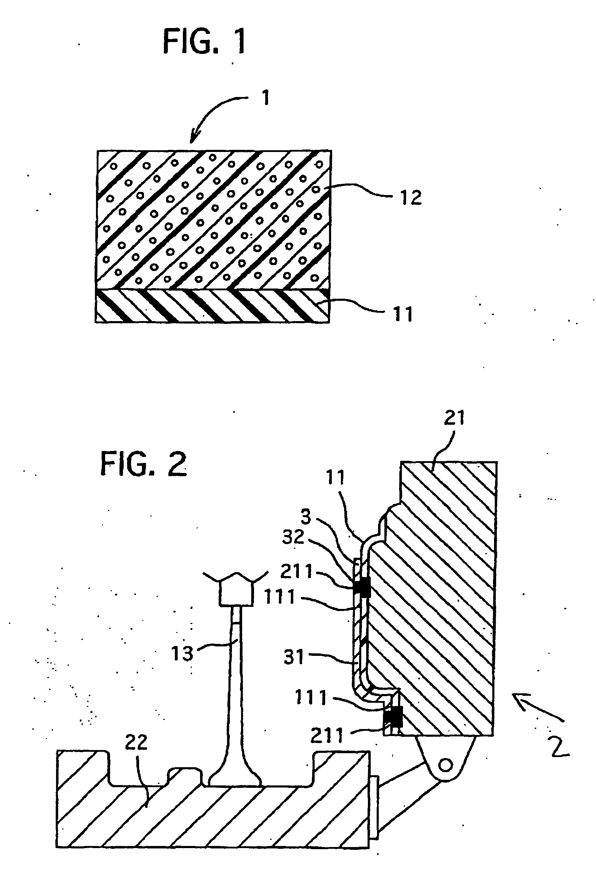

As illustrated in Fig. 1, a vehicle soundproof cover 1 of an example comprised a sound-shielding portion 11 and a sound-absorbing portion 12. The sound-shielding portion 11 was composed of an NBR. The sound-absorbing portion 12 was formed on the sound-shielding portion 11, and was composed of a foamed polyurethane resin. Note that the sound-absorbing portion 12 was formed on a surface of the sound-shielding portion 11, surface which had been subjected to shot blasting in advance. Fig. 1 illustrates a state of a cross section in the vehicle soundproof cover 1 of the example.

The vehicle soundproof cover 1 of the example was designed for reducing noises, which were generated by a vehicle engine. A through hole (not show) was formed in the vehicle soundproof cover 1 so that the vehicle soundproof cover 1 could be fastened to a vehicle. The through hole was formed so that it penetrated through the vehicle soundproof cover 1. Moreover, the through hole was formed so that it penetrated through a fastener 3, which was connected integrally with a part of the surface of the sound-shielding portion 11.

The vehicle soundproof cover 1 of the example could be assembled with the vehicle in the following manner. A convexed portion was formed on a vehicle engine. A threaded hole was bored in the end surface of the leading end of the convexed portion. The vehicle soundproof cover 1 was fitted to the engine by fastening a bolt into the threaded hole while interposing the fastener 3 therebetween.

### (Manufacturing Process)

The example of the present soundproof cover manufacturing process was carried out in the following manner. First, the sound-shielding portion 11 was formed. Then, shot blasting was carried out onto a surface of the sound-shielding portion 11. Finally, the sound-absorbing portion 12 was formed on the surface of the sound-shielding portion 11, surface which had been subjected to shot blasting.

First of all, the sound-shielding portion 11, which was composed of an NBR, was manufactured.

In the manufacture of the sound-shielding portion 11, a raw NBR was weighed by a predetermined quantity, and was charged into a cavity of a mold, which comprised an upper mold and a lower mold. While holding the temperature of the mold at 170 °C, the raw NBR was pressurized for 8 minutes, and was formed into a predetermined configuration by compression molding. In this instance, preliminary through holes 111, 111, which penetrated through the sound-shielding portion 11, were formed at positions where corresponded to through holes of a completed soundproof cover 1.

Thereafter, shot blasting was carried out onto a surface of the sound-shielding portion 11. The shot blasting was carried out by using a shot blasting machine (e.g., "GF-7" made by SHINTO BRAIDER Co., Ltd.). The conditions of the shot blasting (or the setting conditions for the shot blasting machine) were as follows:

| | |
|---|---|
| Grit Particle Diameter: | 0.3 to 1.0 mm; |
| Grit Hardness: | 50 to 60 H_{R}C; |
| Grit Projection Rate: | 120 kg/min. |
| Grit Projection Velocity: | 55 to 60 m/sec.; and |
| Grit Projection Time: | 3 minutes. |

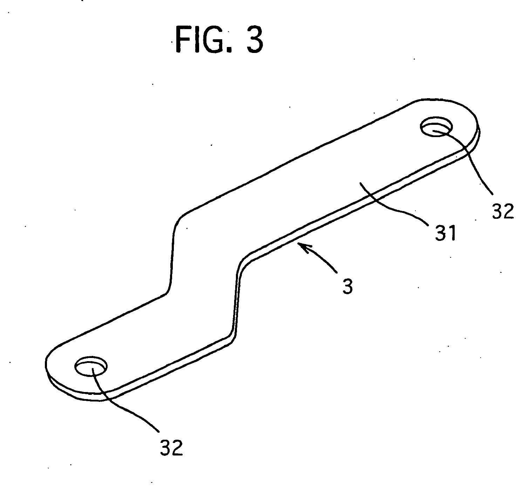

Subsequently, the sound-absorbing portion 12, which was composed of a foamed polyurethane resin, was manufactured by using a mold 2. The mold 2 comprised an upper mold 21 and a lower mold 22. In the mold 2, there was formed a cavity having a predetermined configuration. In forming the sound-absorbing portion 12, the sound-shielding portion 11, whose surface had been subjected to the shot blasting, was disposed on the upper mold 21 of the mold 2 while placing a fastener 3 on a part of the surface. Fig. 2 illustrates how the sound-absorbing portion 12 was formed. Moreover, the fastener 3 is a component part, which comprised a body 31 and fastener openings 32, 32. The body 31 was curved like a crank shape. The fastener openings 32, 32 were formed at the opposite ends of the body 31. Fig. 3 illustrates the fastener 3.

First of all, a mold lubricant was coated on the inner surface of the upper mold 21. Then, the sound-shielding portion 11 was disposed on the inner surface of the upper mold 21 so that it adhered thereon. Note that magnetic protrusions 211, 211, which were composed of a magnet, were formed so as to protrude from the inner surface of the upper mold 21. The magnetic protrusions 211, 211 were placed at positions where corresponded to through holes of a completed vehicle soundproof cover 1, and had a convexed cross section, which protruded in two stages (i.e., an upper stage and a lower stage). Thus, the sound-shielding portion 11 was placed an the inner surface of the upper mold 21 so that the magnetic protrusions 211, 211 were fitted into the preliminary through holes 111, 111 of the sound-shielding portion 11.

Subsequently, the body 31 of the fastener 3 was placed an the sound-shielding portion 11, which was disposed so as to adhere to the inner surface of the upper mold 21, so that it adhered to a part of the surface of the sound-shielding portion 11. In this instance, the fastener 3 was disposed in place while the magnetic protrusions 211, 211 were fitted into the fastener openings 32, 32. Note that the fastener 3 was positioned by fitting the magnetic protrusions 211, 211 into the fastener openings 32, 32 and, at the same time, adhered to the upper mold 21 by the magnetic force of the magnetic protrusions 211, 211. Simultaneously, the fastener 3 pressed the sound-shielding portion 11 onto the inner surface of the upper mold 21.

Thereafter, a liquid-like raw material 13 for forming a foamed polyurethane resin was injected into a cavity of the lower mold 22. The upper mold 21 was fitted into the cavity of the lower mold 22. Then, the mold 2 was closed. In this instance, the cavity of the lower mold 22 had such a configuration that no sound-absorbing portion was formed at portions, which corresponded to the through holes of a completed vehicle soundproof cover 1, so as to conform to vehicle-engine-side convexed portions.

When the mold 2 was closed, the sound-absorbing portion 12, which was composed of a foamed polyurethane resin, was formed integrally as a predetermined configuration on the surface of the sound-shielding portion 11. At the same time, the fastener 3 is fixed in place on a part of the surface of the sound-shielding portion 11.

Finally, the mold 2 was opened after giving a predetermined configuration to the foamed polyurethane resin. Thus, the soundproof cover 1 was completed in which the sound-absorbing cover 12 was formed integrally on the surface of the sound-shielding portion 11.

### Comparative Example

As a comparative example, a vehicle soundproof cover 1' was manufactured. The vehicle soundproof cover 1' comprised a sound-shielding portion 11 and a sound-absorbing portion 12. The sound-shielding portion 11 was composed of an NBR. The sound-absorbing portion 12 was formed on the sound-shielding portion 11, and was composed of a foamed polyurethane resin. Note that the sound-absorbing portion 11 was formed directly on a surface of the sound-shielding portion 12.

### (Manufacturing Process)

Except that the shot blasting was not carried out onto a surface of the sound-shielding portion 11, the vehicle soundproof cover 1' of the comparative example was manufactured in the same manner as the example.

### (Evaluation) '

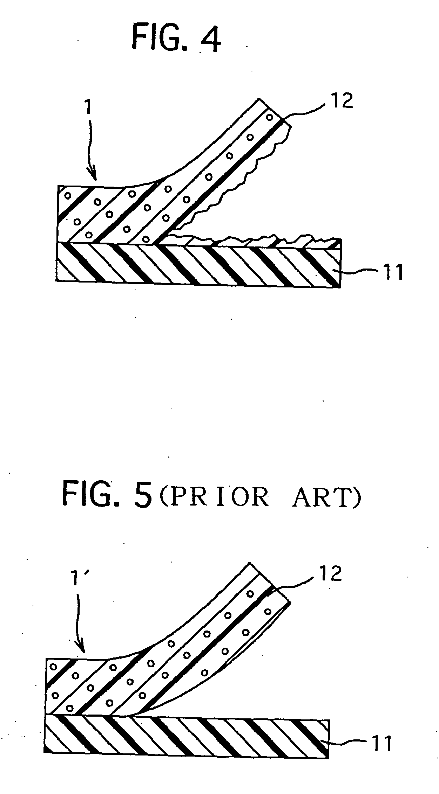

The vehicle soundproof cover 1 of the example and the vehicle soundproof cover 1' of the comparative example were evaluated in the following manner. Until the vehicle soundproof cover 1 as well as the vehicle soundproof cover 1' were torn apart, the sound-shielding portions 11 and the sound-absorbing portions 12 were pulled in the directions so that the interfaces between the sound-shielding portions 11 and the sound-absorbing portions 12 were widened. The thus torn-apart interfaces were observed visually. Figs. 4 and 5 illustrate the vehicle soundproof cover 1 of the example and the vehicle soundproof cover 1' of the comparative example, respectively, after they were torn apart.

As illustrated in Fig. 4, in the vehicle soundproof cover 1 of the example, the breakage occurred in the sound-absorbing portion 12 when the sound-shielding portion 11 and the sound-absorbing portion 12 were pulled away to tear the soundproof cover 1 apart. Namely, the foamed polyurethane resin, which composed the sound-absorbing portion 12, formed the breakage surface. Here, it is shown that, in the vehicle soundproof cover 1 of the example, the breakage occurred in the sound-absorbing portion 12 because of the following reason. The bonding force between the sound-shielding portion 11 and the sound-absorbing portion 12 was larger than the stress, which had the sound-absorbing portion 11 itself broken. Hence, it implies that, in the vehicle soundproof cover 1 of the example, coming-off did not occurred even when the stress was applied thereto.

On the other hand, as illustrated in Fig. 5, in the vehicle soundproof cover 1' of the comparative example, coming-off occurred at the interface between the sound-shielding portion 11 and the sound-absorbing portion 12.

It is understood from the foregoing descriptions that the vehicle soundproof cover 1 of the example made a vehicle soundproof cover in which coming-off hardly occurred at the interface between a sound-shielding portion and a sound-absorbing portion.

Having now fully described the present invention, it will be apparent to one of ordinary skill in the art that many changes and modifications can be made thereto without departing from the spirit or scope of the present invention as set forth herein including the appended claims.
A process for manufacturing a soundproof cover is disclosed, and includes the steps of forming a sound-shielding portion being composed of a rubber, carrying out shot blasting onto a surface of the sound-shielding portion, and forming a sound-absorbing portion, being composed of a foamed resin, on the surface of the sound-shielding portion, which has been subjected to the shot blasting, integrally therewith. The sound-shielding portion and the sound-absorbing portion are bonded with each other firmly, because the shot blasting is carried out in the soundproof cover manufacturing process. Consequently, it is possible to manufacture a soundproof cover in which coming-off hardly arises at the interface between the sound-shielding portion and the sound-absorbing portion.

## Claims

1. A process for manufacturing a soundproof cover (1), comprising the steps of:
forming a sound-shielding portion (11) being composed of a rubber;
carrying out shot blasting onto a surface of the sound-shielding portion (11); and
forming a sound-absorbing portion (12), being composed of a foamed resin, on the surface of the sound-shielding portion (11), which has been subjected to the shot blasting, integrally therewith.

2. The process according to claim 1, wherein the rubber is at least one member selected from the group consisting of an acrylonitrile-butadiene rubber and a chloroprene rubber.

3. The process according to claim 2, wherein the rubber is an acrylonitrile-butadiene rubber.

4. The process according to claim 1, wherein the shot blasting is carried out onto an entire interface between the sound-shielding portion (11) and the sound-absorbing portion (12).

5. The process according to claim 1, wherein the foamed resin is at least one member selected from the group consisting of a foamed polyurethane resin and a foamed silicone resin.

6. The process according to claim 5, wherein the foamed resin is a foamed polyurethane resin.

7. The process according to claim 1, wherein a fastener (3) is disposed on a part of the surface of the sound-shielding portion (11), which has been subjected to the shot blasting, prior to said sound-absorbing portion (12) forming step.

8. The process according to claim 7, wherein the fastener (3) is formed of a metal.

9. The process according to claim 1, wherein an abrasive powder has an average particle diameter falling in a range of from 0.3 to 1.0 mm, and exhibits a Rockwell C hardness of from 40 to 65 HRC in said shot blasting step.

10. The process according to claim 9, wherein the abrasive powder is projected at a rate of from 100 to 140 kg/min. at a velocity of from 50 to 70 m/sec. for a period of from 1 to 6 minutes in said shot blasting step.

11. A soundproof cover (1) manufactured by a process according to claims 1 to 10, comprising the steps of:
forming a sound-shielding portion (11) being composed of a rubber;
carrying out shot blasting onto a surface of the sound-shielding portion (11); and
forming a sound-absorbing portion (12), being composed of a foamed resin, on the surface of the sound-shielding portion (11), which has been subjected to the shot blasting, integrally therewith.

## Patentansprüche

1. Verfahren zum Herstellen einer Schallschutzabdeckung (1) mit den folgenden Schritten:
Ausbilden eines Schall abschirmenden Abschnitts (11), der aus Gummi besteht;
Abstrahlen einer Oberfläche des Schall abschirmenden Abschnitts (11); und
Ausbilden eines Schall absorbierenden Abschnitts (12), der aus einem geschäumten Harz besteht, an der abgestrahlten Oberfläche des Schall abschirmenden Abschnitts (11), einstückig mit diesem.

2. Verfahren gemäß Anspruch 1, wobei der Gummi zumindest ein Element ist, das aus einer Gruppe ausgesucht wird, die aus einem Akrylnitril-Butadien-Gummi und einem Chloropren-Gummi besteht.

3. Verfahren gemäß Anspruch 2, wobei der Gummi ein Akrylnitril-Butadien-Gummi ist.

4. Verfahren gemäß Anspruch 1, wobei eine gesamte Zwischenfläche zwischen dem Schall abschirmenden Abschnitt (11) und dem Schall absorbierenden Abschnitt (12) abgestrahlt wird.

5. Verfahren gemäß Anspruch 1, wobei das geschäumte Harz zumindest ein Element ist, das aus einer Gruppe ausgesucht wird, die aus einem geschäumten Polyurethan-Harz und einem geschäumten Silikon-Harz besteht.

6. Verfahren gemäß Anspruch 5, wobei das geschäumte Harz ein geschäumtes Polyurethan-Harz ist.

7. Verfahren gemäß Anspruch 1, wobei vor dem Schritt des Ausbildens des Schall absorbierenden Abschnitts (12) eine Haltevorrichtung (3) an einem Teil der abgestrahlten Oberfläche des Schall abschirmenden Abschnitts (11) angeordnet wird.

8. Verfahren gemäß Anspruch 7, wobei die Haltevorrichtung (3) aus Metall ausgebildet ist.

9. Verfahren gemäß Anspruch 1, wobei bei dem Schritt des Abstrahlens ein Abriebpulver verwendet wird, das einen mittleren Partikeldurchmesser hat, der in einem Bereich von 0,3 bis 1,0 mm liegt, und eine Härte nach Rockwell C von 40 bis 65 HRC aufweist.

10. Verfahren nach Anspruch 9, wobei das Abriebpulver bei dem Schritt des Abstrahlens mit einer Menge von 100 bis 140 kg/min mit einer Geschwindigkeit von 50 bis 70 m/s für eine Dauer von 1 bis 6 Minuten ausgeworfen wird.

11. Schallschutzabdeckung (1), hergestellt durch ein Verfahren gemäß den Ansprüchen 1 bis 10 mit den folgenden Schritten:
Ausbilden eines Schall abschirmenden Abschnitts (11), der aus Gummi besteht;
Abstrahlen einer Oberfläche des Schall abschirmenden Abschnitts (11); und
Ausbilden eines Schall absorbierenden Abschnitts (12), der aus einem geschäumten Harz besteht, an der abgestrahlten Oberfläche des Schall abschirmenden Abschnitts (11), einstückig mit diesem.

## Revendications

1. Procédé pour la fabrication d'un revêtement d'isolation acoustique (1), comprenant les étapes consistant à :
former une partie de protection antibruit (11) composée de caoutchouc ;
exécuter un grenaillage sur une face de la partie antibruit (11) ; et
former une partie d'absorption de bruit (12), composée d'une résine en mousse, sur la face de la partie de protection antibruit (11), qui a été soumise au grenaillage, intégralement avec celle-ci.

2. Procédé selon la revendication 1, dans lequel le caoutchouc est au moins un élément choisi parmi le groupe comprenant un caoutchouc acrylonitrile-butadiène et un caoutchouc chloroprène.

3. Procédé selon la revendication 2, dans lequel le caoutchouc est un caoutchouc acrylonitrile-butadiène.

4. Procédé selon la revendication 1, dans lequel le grenaillage est exécuté sur une interface entière entre la partie de protection antibruit (11) et la partie d'absorption de bruit (12).

5. Procédé selon la revendication 1, dans lequel la résine en mousse est au moins un élément choisi dans le groupe comprenant la résine en mousse polyuréthane en mousse et une résine silicone en mousse.

6. Procédé selon la revendication 5, dans lequel la résine en mousse est une résine polyuréthane en mousse.

7. Procédé selon la revendication 1, dans lequel une attache (3) est placée sur une partie de la surface de la partie de protection antibruit (11), qui a été soumise au grenaillage avant ladite étape de formation de la partie d'absorption de bruit (12).

8. Procédé selon la revendication 7, dans lequel l'attache (3) est formée d'un métal.

9. Procédé selon la revendication 1, dans lequel une poudre abrasive a un diamètre moyen de particule situé dans la plage de 0,3 mm à 1,0 mm, et présente une dureté Rockwell C de 40 HRC à 65 HRC dans ladite étape de grenaillage.

10. Procédé selon la revendication 9, dans lequel la poudre abrasive est projetée à une vitesse de 100 kg/min à 140 kg/min à une vélocité de 50 m/s à 70 m/s pendant une durée de 1 minute à 6 minutes dans ladite étape de grenaillage.

11. Revêtement d'isolation acoustique (1) fabriqué par un procédé selon les revendications 1 à 10, comprenant les étapes consistant à :
former une partie de protection antibruit (11) composée de caoutchouc ;
exécuter un grenaillage sur une face de la partie antibruit (11) ; et
former une partie d'absorption de bruit (12), composée d'une résine en mousse, sur la face de la partie de protection antibruit (11), qui a été soumise au grenaillage, intégralement avec celle-ci.
